# EUROPEAN PATENT SPECIFICATION

(11) **EP 4 617 553 B1**
(45) Date of publication and mention of the grant of the patent: **26.08.2026**
(21) Application number: 23793937.6
(22) Date of filing: 02.10.2023
(51) Int. Cl.: F17C 13/04

(54) **VALVE DEVICE, TANK, FUEL CELL SYSTEM, AND HYDROGEN COMBUSTION ENGINE SYSTEM**
VENTILVORRICHTUNG, TANK, BRENNSTOFFZELLENSYSTEM UND WASSERSTOFFVERBRENNUNGSMOTORSYSTEM
DISPOSITIF DE SOUPAPE, RÉSERVOIR, SYSTÈME DE PILE À COMBUSTIBLE ET SYSTÈME DE MOTEUR À COMBUSTION À HYDROGÈNE

(30) Priority: 11.11.2022 JP 2022180952
(43) Date of publication of application: 17.09.2025
(73) Proprietor: Robert Bosch GmbH, 70442 Stuttgart (DE)
(72) Inventor: FUJII, Shota, Higashimatsuyama-shi, Saitama 355-8603 (JP)
(86) International application number: PCT/IB2023/059844
(87) International publication number: WO 2024/100469

(56) References cited:
- EP-A1- 3 015 756
- WO-A1-2013/031190
- JP-B2- 4 714 125
- US-A1- 2018 138 528

## Description

### Technical Field

The present invention relates to a tank valve apparatus forming a fuel cell system or a hydrogen combustion engine system, a tank provided with the valve apparatus, and a fuel cell system or a hydrogen combustion engine system including the tank.

### Background Art

In a vehicle equipped with a fuel cell, the fuel cell generates power using hydrogen as fuel gas stored in a on-board tank and oxygen as oxidation gas contained in air. The tank is filled with hydrogen, for example, in such a manner that in a hydrogen station, a hydrogen supply nozzle extending from a hydrogen filling apparatus is fitted and attached to a receptacle of the fuel cell vehicle for receiving supplied hydrogen and hydrogen is supplied to the tank of the fuel cell vehicle. A hydrogen filling path is provided with one or more valves.

Supply of hydrogen in a direction from the tank to the fuel cell is controlled by, e.g., a control valve having an opening and closing mechanism. In terms of, e.g., attachability and a cost, it is advantageous to collectively provide, as an interface connecting the tank and the outside to each other, the control valve and the valve(s) on the filling path in one valve apparatus (see, e.g., a valve unit of Patent Literature 1). PTL 2 relates to a throttle valve aiming to prevent the gaskets from being squashed. PTL 3 relates to a gas fuel piping apparatus having a structure suitable for leak inspection.

### Citation List

### Patent Literature

PTL 1: JP2019-116929A
PTL 2: EP 3 015 756 A1
PTL 3: JP 4 714125 B2

### Summary of Invention

### Technical Problem

However, when the tank is filled with hydrogen in, e.g., the hydrogen station, slight moisture is mixed with the hydrogen in some cases. For example, in some cases, when the nozzle is fitted, water adhering to a fitting portion or moisture contained in external air is mixed with hydrogen for filling. Upon hydrogen filling, such moisture enters the control valve provided to the valve apparatus when the hydrogen passes through the valve apparatus. Particularly, there is a probability of causing, e.g., a problem that when the moisture is accumulated on the opening and closing mechanism, the opening and closing mechanism is fixed because of the moisture being frozen due to a decrease in an environmental temperature.

The present invention has been made in view of the above-described problem, and an object of the present invention is to provide a tank valve apparatus that prevents moisture mixed with hydrogen from flowing into a control valve provided to the valve apparatus when a tank is filled with the hydrogen via the valve apparatus in, e.g., a hydrogen station.

### Solution to Problem

A tank valve apparatus according to the present invention is provided in independent claim 1. According to the present invention, the valve apparatus for being included in a tank for storing hydrogen comprises a control valve configured to control supply of hydrogen stored in a tank body of the tank to the outside, a supply passage provided with the control valve, a tank passage configured to communicate with the tank body, a three-way valve to which the tank passage and the supply passage are connected, and a filling passage configured to introduce hydrogen into the three-way valve. When the tank is filled with hydrogen, due to pressing force of hydrogen introduced from the filling passage, a valve body of the three-way valve is actuated, the filling passage and the tank passage communicate with each other and the filling passage and the supply passage are closed from each other. Advantageous Effects of Invention

According to the present invention, the tank valve apparatus can be provided, which prevents moisture mixed with hydrogen from flowing into the control valve provided to the valve apparatus when the tank is filled with the hydrogen via the valve apparatus in, e.g., the hydrogen station.

### Brief Description of Drawings

Fig. 1 is a schematic diagram showing a configuration example of a fuel cell system using a tank valve apparatus according to an embodiment of the present invention;
Fig. 2 is a schematic diagram showing the configuration of the tank valve apparatus according to the embodiment of the present invention;
Fig. 3 is a schematic diagram of a three-way valve used for the tank valve apparatus according to the embodiment of the present invention;
Fig. 4 is a schematic diagram for describing actuation of the tank valve apparatus according to the embodiment of the present invention;
Fig. 5 is a schematic diagram for describing actuation of the tank valve apparatus according to the embodiment of the present invention;
Fig. 6 is a specific example of the three-way valve used for the tank valve apparatus according to the embodiment of the present invention;
Fig. 7 is a view for describing actuation of a specific example of the three-way valve;
Fig. 8 is a view for describing actuation of the specific example of the three-way valve; and
Fig. 9 is a schematic diagram showing a configuration example of a hydrogen combustion engine system using the tank valve apparatus according to the embodiment of the present invention.

### Description of Embodiments

Hereinafter, a tank valve apparatus and a fuel cell system using the valve apparatus according to the present invention will be specifically described with reference to the drawings as necessary. Note that in each figure, the same reference numerals denote the same members unless otherwise specified and description thereof will be omitted as necessary.

### <Entire configuration of fuel cell system>

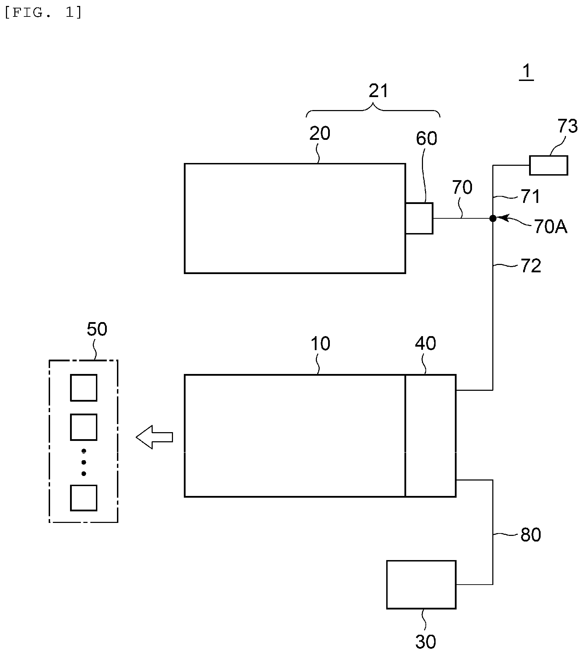

Fig. 1 is a schematic diagram for describing one example of an entire configuration of a fuel cell system 1. The fuel cell system 1 includes a tank 21, a fuel cell 10, an air compressor 30, an auxiliary instrument 40, a consumption instrument 50, etc. The fuel cell system 1 is, for example, a fuel cell system for a fuel cell vehicle.

The fuel cell 10 is, for example, a polymer electrolyte fuel cell, and is configured such that a plurality of cells, each of which includes a membrane electrode assembly (MEA) sandwiched by a pair of conductive separators, is stacked on each other.

The tank 21 is a storage filled with compressed hydrogen. The tank 21 includes a tank body 20 and a valve apparatus 60. Hydrogen in the tank 21 flows out of the valve apparatus 60, flows in a pipe 70, a branch 70A, and a pipe 72, and is supplied to the fuel cell 10 via the auxiliary instrument 40. Note that only one tank 21 is shown in Fig. 1, but a plurality of tanks 21 may be provided.

Another pipe 71 extending from the branch 70A is provided with a receptacle 73 for filling the tank 21 with hydrogen. The receptacle 73 is, for example, a connector to be fitted and attached to a nozzle of a hydrogen filling apparatus when the tank 21 is filled with hydrogen from the hydrogen filling apparatus in a hydrogen station.

The air compressor 30 takes and compresses external air, and supplies the compressed air to the fuel cell 10 via a pipe 80 and the auxiliary instrument 40.

The auxiliary instrument 40 includes, for example, a decompression valve that decompresses hydrogen and an injector that adjusts the amount of hydrogen to be supplied to the fuel cell 10. Further, the auxiliary instrument 40 includes, for example, a humidifier that humidifies air supplied from the air compressor 30 and a back pressure valve that controls a pressure. Instruments included in the auxiliary instrument 40 are not limited to these instruments. The instruments included in the auxiliary instrument 40 are not necessarily collectively provided as the auxiliary instrument 40, but may be provided at separate locations.

The consumption instrument 50 is, for example, an instrument to be actuated with electricity, such as an electrical motor, an electronic controlling apparatus, a sensor, or an actuator. The electrical motor is, for example, an electrical motor for driving a wheel. The consumption instrument 50 is directly or indirectly supplied with power from the fuel cell 10.

### <Valve apparatus>

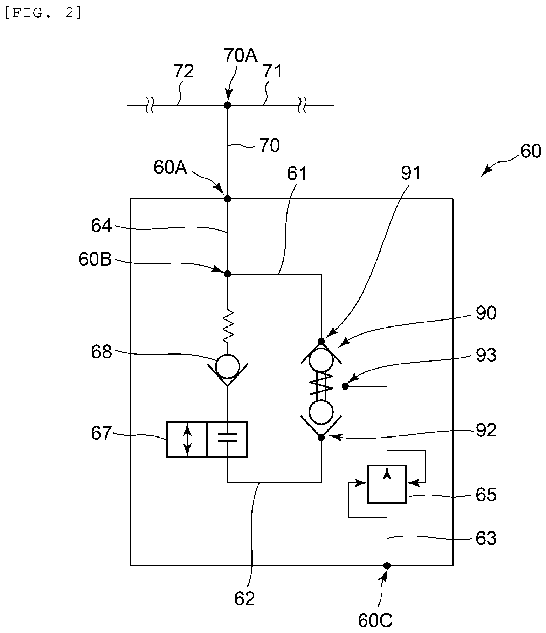

Fig. 2 is a schematic diagram for describing one example of the valve apparatus 60 for the tank 21 according to the present invention. In the valve apparatus 60, a filling passage 61, a supply passage 62, a tank passage 63, a common passage 64, an excess flow prevention valve 65, a three-way valve 90, a control valve 67, a check valve 68, etc. are provided. The three-way valve 90 has a first connection portion 91, a second connection portion 92, and a third connection portion 93 each communicating with corresponding locations of the three-way valve 90.

The valve apparatus 60 has, between the valve apparatus 60 and the tank body 20, a seal portion (not shown) that seals the inside and outside of the tank body 20 from each other. Further, the valve apparatus 60 has an outer connection portion 60A and a tank connection portion 60C. The tank connection portion 60C is provided to a position opened to the inside of the tank body 20. That is, the tank connection portion 60C is formed at a position facing a hydrogen storage area in the tank body 20 with respect to the seal portion. On the other hand, the outer connection portion 60A is provided opened to the outside of the tank 21 with respect to the seal portion. The pipe 70 is connected to the outer connection portion 60A at a position outside the tank 21.

Of the tank passage 63, one end is connected to the tank connection portion 60C, and the other end is connected to the third connection portion 93 of the three-way valve 90. The excess flow prevention valve 65 is provided in the middle of the tank passage 63. The excess flow prevention valve 65 is actuated to limit the flow rate of hydrogen flowing in a direction from the tank connection portion 60C to the third connection portion 93 in a case where the flow rate exceeds a predetermined amount. On the other hand, the excess flow prevention valve 65 does not limit the flow rate in a case where hydrogen flows in the opposite direction.

Of the common passage 64, one end is connected to the outer connection portion 60A, and the other end is connected to a branch 60B. In addition to the common passage 64, the filling passage 61 and the supply passage 62 are connected to the branch 60B.

Of the supply passage 62, one end is connected to the branch 60B, and the other end is connected to the second connection portion 92 of the three-way valve 90. In the middle of the supply passage 62, the check valve 68 and the control valve 67 are provided in this order from the branch 60B. The check valve 68 is a valve actuated to allow a flow only in a direction from the control valve 67 to the branch 60B. The control valve 67 is an electromagnetic valve configured switchable to be opened or closed by ON or OFF of energization. In cooperation with the decompression valve and the injector in the auxiliary instrument 40, the control valve 67 adjusts hydrogen to be supplied from the tank 21 to the fuel cell 10.

Of the filling passage 61, one end is connected to the branch 60B, and the other end is connected to the first connection portion 91 of the three-way valve 90.

### <Three-Way Valve>

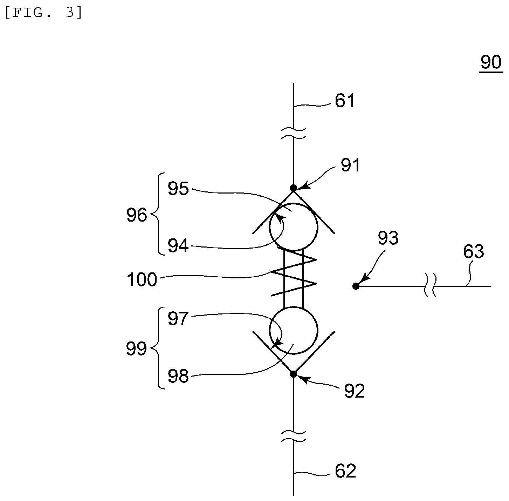

The three-way valve 90 will be described with reference to Fig. 3. The three-way valve 90 includes the first connection portion 91, the second connection portion 92, the third connection portion 93, a first valve 96 having a first valve sheet 94 and a first valve body 95, a second valve 99 having a second valve sheet 97 and a second valve body 98, and a resilient body 100. Preferably, the resilient body 100 may be a spring.

The first valve body 95 and the second valve body 98 are integrally formed. For example, when the first valve 96 is closed by the first valve body 95, the second valve body 98 separates from the second valve sheet 97, and the second valve 99 is opened accordingly. On the other hand, when the second valve 99 is closed by the second valve body 98, the first valve body 95 separates from the first valve sheet 94, and the first valve 96 is opened accordingly.

The first connection portion 91 communicates with the first valve 96, and is formed so as to communicate with the third connection portion 93 by opening the first valve 96. In this case, the second valve 99 is closed, and the second connection portion 92 and the third connection portion 93 are blocked from each other. On the other hand, the second connection portion 92 communicates with the second valve 99, and is formed so as to communicate with the third connection portion 93 by opening the second valve 99. In this case, the first valve 96 is closed, and the first connection portion 91 and the third connection portion 93 are blocked from each other.

The spring 100 presses the first valve body 95 in a direction of closing the first valve 96, and therefore, when no external force acts, the first valve 96 is closed and the second valve 99 is opened. For example, when the nozzle of the hydrogen filling apparatus is fitted to the receptacle 73 in the hydrogen station, hydrogen flows into the three-way valve 90 via the first connection portion 91 by way of the filling passage 61, and presses the first valve body 95. The spring force of the spring 100 is set such that the first valve 96 is opened by such pressing force of the hydrogen upon filling.

### <Actuation of valve apparatus 60 upon hydrogen supply and filling>

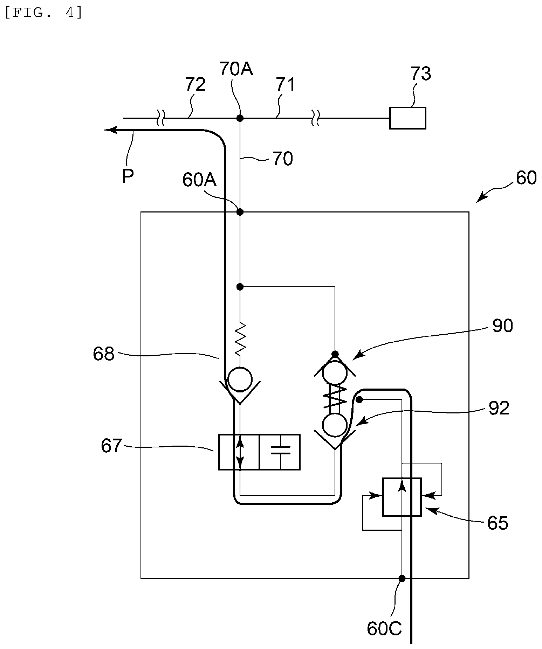

Actuation of the valve apparatus 60 upon supply of hydrogen from the tank 21 to the fuel cell 10 will be described with reference to Fig. 4. The control valve 67 which is the electromagnetic valve is controlled to be opened, and in this manner, hydrogen in the tank 21 is fed via the excess flow prevention valve 65, the opened second valve 99 of the three-way valve 90, the control valve 67, the check valve 68, the outer connection portion 60A, the pipe 70, and the pipe 72. Such hydrogen is adjusted by the decompression valve and the injector included in the auxiliary instrument 40, and a required amount of hydrogen is supplied to the fuel cell 10. An arrow P in the figure indicates a hydrogen supply path. For example, in a case where the control valve 67, the decompression valve, or the injector is broken down and hydrogen flows at a predetermined flow rate or more, the excess flow prevention valve 65 acts to limit the flow rate of hydrogen. Note that a check valve is provided not to allow the flow of hydrogen in a direction from the branch 70A to the receptacle 73, and therefore, no hydrogen flows out of the receptacle 73 upon hydrogen supply.

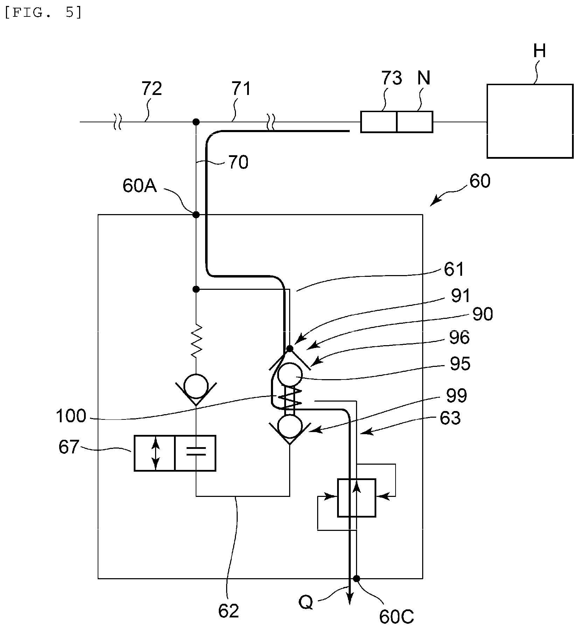

Actuation of the valve apparatus 60 upon filling of the tank 21 with hydrogen from the hydrogen filling apparatus will be described with reference to Fig. 5. When a nozzle N of a hydrogen filling apparatus H is fitted to the receptacle 73, hydrogen in the hydrogen filling apparatus H flows into the three-way valve 90 via the first connection portion 91 by way of the pipe 71, the pipe 70, the outer connection portion 60A, and the filling passage 61, and presses the first valve body 95. As described above, the spring force of the spring 100 is set such that the first valve 96 is opened by the pressing force of such inflow hydrogen, and therefore, the first valve 96 is opened and the tank body 20 is filled with the hydrogen via the tank passage 63 and the tank connection portion 60C. On the other hand, the second valve 99 is closed by opening the first valve 96, and therefore, no hydrogen reaches the control valve 67 via the supply passage 62 during hydrogen filling. Thus, there is no probability of causing, e.g., a problem that moisture mixed with the hydrogen flows into the control valve 67 provided to the valve apparatus 60 and an opening and closing mechanism of the control valve 67 is fixed because of the moisture being frozen due to a decrease in an environmental temperature. An arrow Q in the figure indicates a hydrogen filling path.

### <Specific example of three-way valve>

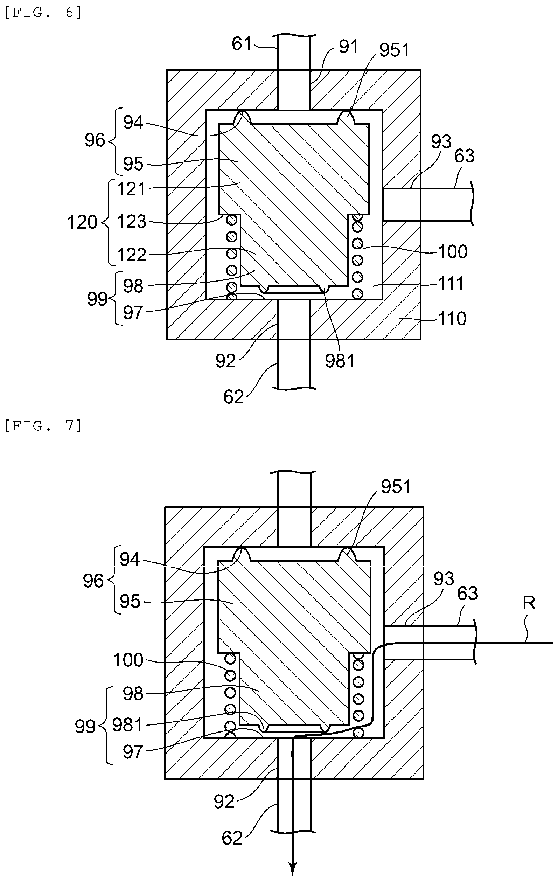

Fig. 6 shows a specific example of the three-way valve 90. The three-way valve 90 has an outer shell 110 with an inner chamber 111 which is a cylindrical space, a cylindrical body 120 provided in the inner chamber 111, and the compression spring 100 pressing the cylindrical body 120. The first connection portion 91, the second connection portion 92, and the third connection portion 93 communicating with the inner chamber 111 are each provided to the upper, lower, and side surfaces of the inner chamber 111. The first valve sheet 94 is provided to the upper surface of the inner chamber 111 so as to surround, in a circular ring shape, the opening of the first connection portion 91, and the second valve sheet 97 is provided to the lower surface of the inner chamber 111 so as to surround, in a circular ring shape, the opening of the second connection portion 92. Note that the outer shell 110 may be formed as part of a housing of the valve apparatus 60.

The cylindrical body 120 has an upper cylindrical portion 121, a lower cylindrical portion 122 having a smaller diameter than that of the upper cylindrical portion 121 and formed coaxially with the upper cylindrical portion 121, and a stepped portion 123 between the upper cylindrical portion 121 and the lower cylindrical portion 122.

A clearance, which is a hydrogen flow path, is formed between the inner surface of the inner chamber 111 and each of the side surfaces of the upper cylindrical portion 121 and the lower cylindrical portion 122. The side surface of the upper cylindrical portion 121 may be formed with a slide surface against the inner surface of the inner chamber 111 and an axial groove which is a hydrogen flow path. In this case, such a groove is formed so as to penetrate the upper cylindrical portion 121 from the upper surface thereof to the stepped portion 123. The number of grooves may be one or more.

The upper cylindrical portion 121 has the function of the first valve body 95, and on the upper surface thereof, has a circular ring-shaped raised first seal portion 951 arranged corresponding to the first valve sheet 94. By contact between the first valve sheet 94 and the first seal portion 951, the first valve 96 is closed. By separation of the first valve sheet 94 and the first seal portion 951, the first valve 96 is opened. Note that a sheet structure between the first valve sheet 94 and the first seal portion 951 is not limited to this example. As such a sheet structure, various well-known sheet structures are applicable.

The lower cylindrical portion 122 has the function of the second valve body 98, and on the lower surface thereof, has a circular ring-shaped raised second seal portion 981 arranged corresponding to the second valve sheet 97. By contact between the second valve sheet 97 and the second seal portion 981, the second valve 99 is closed. By separation of the second valve sheet 97 and the second seal portion 981, the second valve 99 is opened. Note that a sheet structure between the second valve sheet 97 and the second seal portion 981 is not limited to this example. As such a sheet structure, various well-known sheet structures are applicable.

The compression spring 100 is arranged between the stepped portion 123 and the lower surface of the inner chamber 111. The compression spring 100 presses the cylindrical body 120 upward. The spring force of the compression spring 100 is set such that when the tank 21 is filled with hydrogen, the cylindrical body 120 moves downward by the pressing force of the hydrogen supplied from the hydrogen filling apparatus and the first valve 96 is opened accordingly.

### <Actuation of specific example of three-way valve>

Upon hydrogen supply, the control valve 67 is controlled to be opened, and accordingly, hydrogen moves so as to flow out to the supply passage 62 via the second connection portion 92 by way of the opened second valve 99 (see Fig. 7). An arrow R in the figure indicates a hydrogen movement route.

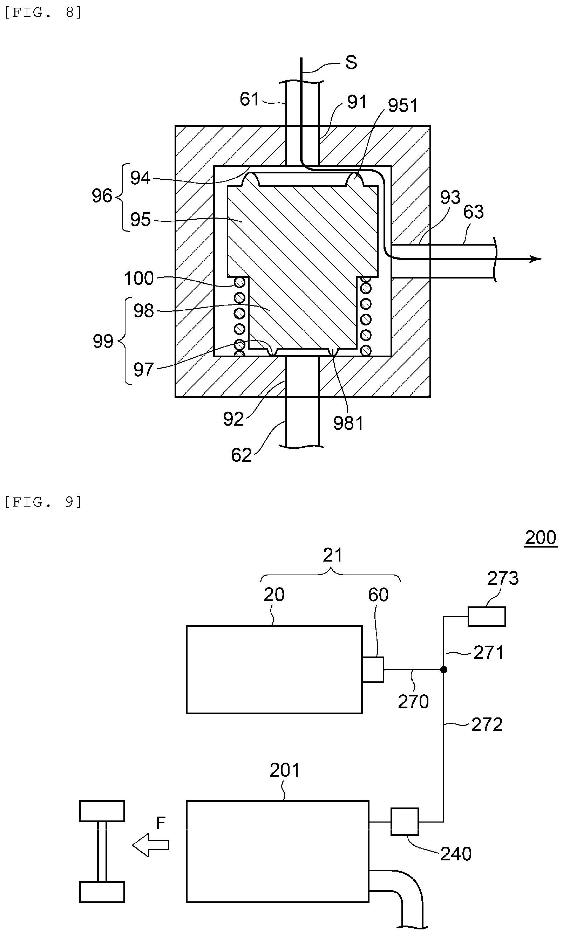

Upon hydrogen filling, hydrogen flows in via the first connection portion 91, and presses the cylindrical body 120. As described above, the spring force of the spring 100 is set such that the cylindrical body 120 moves downward by such pressing force of the hydrogen upon filling. Thus, the first valve 96 is opened, and the hydrogen flows out to the tank passage 63 via the third connection portion 93 by way of the inner chamber 111 (see Fig. 8). An arrow S in the figure indicates a hydrogen movement route.

Meanwhile, by downward movement of the cylindrical body 120, the second seal portion 981 of the second valve body 98 contacts the second valve sheet 97, and accordingly, the second valve 99 is closed. Thus, the filled hydrogen does not reach the control valve 67 from the second connection portion 92 via the supply passage 62. Consequently, there is no probability of causing, e.g., a problem that moisture mixed with the hydrogen flows into the control valve 67 provided to the valve apparatus 60 and the opening and closing mechanism is fixed because of the moisture being frozen due to a decrease in the environmental temperature.

With the configuration in which the valve apparatus 60 according to the present invention is used for the tank 21 for the fuel cell system as described above, there is no probability of causing, e.g., a problem that when the inside of the tank 21 is filled with hydrogen via the valve apparatus 60 in the hydrogen station, moisture mixed with the hydrogen flows into the control valve 67 provided to the valve apparatus 60 and the opening and closing mechanism is fixed because of the moisture being frozen due to a decrease in the environmental temperature.

The tank 21 having the valve apparatus 60 may be applied to a hydrogen combustion engine system 200. Fig. 9 is a schematic diagram of the hydrogen combustion engine system 200 to which the tank 21 is applied. A hydrogen combustion engine 201 is an internal combustion engine that generates drive force F by combusting hydrogen in a cylinder. Hydrogen in the tank 21 is supplied to the hydrogen combustion engine 201 via a hydrogen supply apparatus 240 (including an injector etc.) etc. by way of pipes 270, 272. Upon hydrogen filling, the tank 21 is filled with hydrogen from a hydrogen filling apparatus coupled to a receptacle 273 via a pipe 271 and the pipe 270. Actuation of the valve apparatus 60 upon hydrogen supply to the hydrogen combustion engine 201 and upon filling of the tank 21 with hydrogen is as described above as actuation of the valve apparatus 60 in the fuel cell system 1. Note that in Fig. 9, only one tank 21 is shown, but a plurality of tanks 21 may be provided.

As described above, with the configuration in which the valve apparatus 60 according to the present invention is used for the tank 21 for the hydrogen combustion engine system 200, there is no probability of causing, e.g., a problem that when the inside of the tank 21 is filled with hydrogen via the valve apparatus 60 in, e.g., the hydrogen station, moisture mixed with the hydrogen flows into the control valve 67 provided to the valve apparatus 60 and the opening and closing mechanism is fixed because of the moisture being frozen due to, e.g., a decrease in the environmental temperature.

### Reference Signs List

- 1:: Fuel cell system
- 10:: Fuel cell
- 20:: Tank body
- 21:: Tank
- 30:: Air compressor
- 40:: Auxiliary instrument
- 50:: Consumption instrument
- 60:: Valve apparatus
- 60A:: Outer connection portion
- 60B:: Branch
- 60C:: Tank connection portion
- 61:: Filling passage
- 62:: Supply passage
- 63:: Tank passage
- 64:: Common passage
- 65:: Excess flow prevention valve
- 67:: Control valve
- 68:: Check valve
- 70:: Pipe
- 70A:: Branch
- 71:: Pipe
- 72:: Pipe
- 73:: Receptacle
- 80:: Pipe
- 90:: Three-way valve
- 91:: First connection portion
- 92:: Second connection portion
- 93:: Third connection portion
- 94:: First valve sheet
- 95:: First valve body
- 96:: First valve
- 97:: Second valve sheet
- 98:: Second valve body
- 99:: Second valve
- 100:: Resilient body (spring, compression spring)
- 110:: Outer shell
- 111:: Inner chamber
- 120:: Cylindrical body
- 121:: Upper cylindrical portion
- 122:: Lower cylindrical portion
- 123:: Stepped portion
- 200:: Hydrogen combustion engine system
- 201:: Hydrogen combustion engine
- 240:: Hydrogen supply apparatus
- 270:: Pipe
- 271:: Pipe
- 272:: Pipe
- 273:: Receptacle
- 951:: First seal portion
- 981:: Second seal portion

## Claims

1. A valve apparatus (60) for being included in a tank (21) for storing hydrogen, comprising:
a control valve (67) configured to control supply of hydrogen stored in a tank body (20) of the tank (21) to an outside;
a supply passage (62) provided with the control valve (67);
a tank passage (63) configured to communicate with the tank body (20);
a three-way valve (90) to which the tank passage (63) and the supply passage (62) are connected; and
a filling passage (61) configured to introduce hydrogen into the three-way valve (90),
wherein when the tank (21) is filled with hydrogen, a valve body (95, 98) of the three-way valve (90) is actuated by the pressing force of the hydrogen introduced from the filling passage (61) causing the filling passage (61) and the tank passage (63) to communicate with each other and the filling passage (61) and the supply passage (62) to be closed from each other.

2. A tank (21) comprising:
the valve apparatus (60) according to claim 1.

3. A fuel cell system (1) comprising:
the tank (21) according to claim 2.

4. A hydrogen combustion engine system (200) comprising:
the tank (21) according to claim 2.

## Patentansprüche

1. Ventileinrichtung (60) zum Einschließen in einen Tank (21) zum Speichern von Wasserstoff, umfassend:
ein Steuerventil (67), das dazu ausgelegt ist, die Zufuhr von in einem Tankkörper (20) des Tanks (21) gespeichertem Wasserstoff nach außen zu steuern;
einen Zufuhrkanal (62), der mit dem Steuerventil (67) versehen ist;
einen Tankkanal (63), der dazu ausgelegt ist, mit dem Tankkörper (20) zu kommunizieren;
ein Dreiwegeventil (90), mit dem der Tankkanal (63) und der Zufuhrkanal (62) verbunden sind; und
einen Füllkanal (61), der dazu ausgelegt ist, Wasserstoff in das Dreiwegeventil (90) einzuführen,
wobei, wenn der Tank (21) mit Wasserstoff gefüllt ist, ein Ventilkörper (95, 98) des Dreiwegeventils (90) durch die Presskraft des aus dem Füllkanal (61) eingeführten Wasserstoffs betätigt wird, wodurch bewirkt wird, dass der Füllkanal (61) und der Tankkanal (63) miteinander kommunizieren und der Füllkanal (61) und der Zufuhrkanal (62) voneinander abgeschlossen werden.

2. Tank (21), umfassend:
die Ventileinrichtung (60) gemäß Anspruch 1.

3. Brennstoffzellensystem (1), umfassend:
den Tank (21) gemäß Anspruch 2.

4. Wasserstoffverbrennungsmotorsystem (200), umfassend:
den Tank (21) gemäß Anspruch 2.

## Revendications

1. Appareil à vanne (60) pour être compris dans un réservoir (21) de stockage d'hydrogène comprenant :
une vanne de commande (67) configurée pour commander une alimentation d'hydrogène stocké dans un corps de réservoir (20) du réservoir (21) vers un extérieur ;
un passage d'alimentation (62) muni de la vanne de commande (67) ;
un passage de réservoir (63) configuré pour communiquer avec le corps de réservoir (20) ;
une vanne trois voies (90) à laquelle le passage de réservoir (63) et le passage d'alimentation (62) sont reliés ; et
un passage de remplissage (61) configuré pour introduire de l'hydrogène dans la vanne trois voies (90),
lorsque le réservoir (21) est rempli d'hydrogène, un corps de vanne (95, 98) de la vanne trois voies (90) étant actionné par la force de pression de l'hydrogène introduit par le passage de remplissage (61) faisant communiquer entre eux le passage de remplissage (61) et le passage de réservoir (63) et la fermeture entre le passage de remplissage (61) et le passage d'alimentation (62).

2. Réservoir (21) comprenant :
l'appareil à vanne (60) selon la revendication 1.

3. Système de pile à combustible (1) comprenant :
le réservoir (21) selon la revendication 2.

4. Système de moteur thermique à hydrogène (200) comprenant :
le réservoir (21) selon la revendication 2.
